# EUROPÄISCHE PATENTSCHRIFT

(11) **EP 2 439 016 B1**
(45) Veröffentlichungstag und Bekanntmachung des Hinweises auf die Patenterteilung: **09.11.2016**
(21) Anmeldenummer: 11183218.4
(22) Anmeldetag: 29.09.2011
(51) Int. Cl.: B23P 19/06, B21J 15/46, F16B 37/06

(54) **Verfahren und Vorrichtung zum Anbringen von Stanzelementen an Rohren**
Method and device for attaching piercing elements to tubes
Procédé et dispositif d'application d'éléments de perçage sur des tuyaux

(30) Priorität: 05.10.2010 DE 102010041971
(43) Veröffentlichungstag der Anmeldung: 11.04.2012
(73) Patentinhaber: Arnold & Shinjo GmbH & Co. KG, 74677 Dörzbach (DE)
(72) Erfinder: Beck, Friedrich, 74613 Öhringen (DE)
(74) Vertreter: Patentanwälte Ruff, Wilhelm, Beier, Dauster & Partner mbB

(56) Entgegenhaltungen:
- EP-A1- 1 714 731
- EP-A1- 1 905 534
- DE-C- 395 771
- JP-A- 2008 223 877
- US-A- 3 851 373
- US-A- 5 329 694

## Beschreibung

Die Erfindung betrifft eine Vorrichtung und ein Verfahren zum Anbringen von Stanzelementen, insbesondere Stanzmuttern an Rohren oder dergleichen.

Es ist bekannt, solche Einstanzmuttern mit einem Blech zu verbinden, indem die Einstanzmuttern auf das Blech angedrückt werden, das auf der gegenüberliegenden Seite von einer Matrize unterstützt wird. Ein Stanzvorsprung der Mutter mit einer scharfen Kante stanzt ein Loch in das Blech, bis eine den Stanzvorsprung umgebenden Anlagefläche an dem Blech zur Anlage kommt. Durch das Zusammenwirken der Matrize und des die Einstanzmutter anpressenden Pressstempels wird der Rand des Lochs um den Stanzvorsprung so verformt, das die Mutter axial festgelegt ist. In der Regel besteht auch ein Kraftschluss in Drehrichtung (EP 2 141 370 A1).

Voraussetzung für dieses Verfahren und diese Art der Anbringung von Stanzelementen ist, dass eine Matrize auf der Rückseite angeordnet werden kann.

Bei ebenen Blechen und Blechen, deren Rückseite frei zugänglich ist, damit man die Matrize während des Stanzvorgangs unterstützen kann, ist diese Methode problemlos durchzuführen.

Es ist bereits eine Presse zum Anbringen von Stanzmuttern an Rohren bekannt, bei der innerhalb des Rohrs ein Kern angeordnet wird, der einen radial gegen das Rohr verschiebbaren Kolben mit einer Aufnahme für die Stanzmutter aufweist. An der Außenseite des Rohrs ist ebenfalls ein Pressstempel angeordnet. Zur Befestigung erfolgt ein Anpressen der Mutter von innen und von außen gegen das Rohr (EP 1905534 A1).

Bei einer weiteren Einrichtung zum Verpressen von Stanzmuttern mit Rohren werden die Muttern mechanisch und hydraulisch von der Innenseite her gegen die Wand des Rohrs angepresst und gleichzeitig ein Gegenelement von der Außenseite des Rohrs her angepresst (US 3851373).

Ebenfalls bekannt ist eine Einrichtung zum Verpressen von Muttern mit Rohren von der Innenseite her, bei der die Mutter in einem Kern durch eine Axialbewegung radial nach außen gegen die Innenseite des Rohrs angepresst wird, bevor ein Pressstempel von der Außenseite her die Verpressung durchführt (US 5329694).

Der Erfindung liegt die Aufgabe zu Grunde, eine Möglichkeit zu schaffen, derartige Einstanzelemente an hohlen Gegenständen anzubringen, deren Innenraum das Anbringen und Unterstützen von Matrizen nicht zulässt. Zu solchen Gegenständen gehören beispielsweise Rohre.

Zur Lösung dieser Aufgabe schlägt die Erfindung eine Vorrichtung mit den im Anspruch 1 genannten Merkmalen sowie ein Verfahren mit den im Anspruch 10 genannten Merkmale vor. Weiterbildungen der Erfindung sind Gegenstand von Unteransprüchen.

Die Erfindung schlägt also eine Vorrichtung vor, die einen Kern enthält. Dieser Kern wird in dem Rohr angeordnet. Der Kern selbst ist an einer Halterung angebracht, die nicht ausreichend stabil ist, um die beim Stanzen auftretenden Kräfte aufzunehmen. Stattdessen gibt es eine Auflage, die an der dem Stempel gegenüberliegenden Seite des Kerns mit einem Zwischenraum zum Kern angeordnet ist. Das Rohr oder der rohrähnliche Gegenstand liegt nun in dem axialen Bereich, wo das Stanzelement angebracht werden soll, zwischen dem Kern und der Auflage. Der Abstand zwischen dem Kern und der Auflage ist an die Wanddicke des Rohrs angepasst. Die Auflage selbst spielt nun die Rolle der Unterstützung, so dass die beim Stanzen auftretenden Kräfte zunächst über den Kern auf das Rohr übertragen werden, das dann auf der gegenüberliegenden Seite unterstützt wird.

Auf diese Weise wird es möglich, auch an Rohren mit geringem Durchmesser Stanzelemente, insbesondere Stanzmuttern anzubringen.

Wenn das Stanzelement an der Innenseite des Rohrs angebracht werden soll, enthält der Kern eine Aufnahme für das anzubringende Stanzelement, während die Matrize, also das zum Verformen des Rohrs im Bereich des zu befestigenden Stanzelements erforderliche Gegenelement, an dem Stempel angeordnet ist oder von dem Stempel gebildet wird.

Wenn dagegen das Stanzelement an der Außenseite des Rohrs angebracht werden soll, enthält der Stempel eine Aufnahme für das anzubringende Stanzelement und die Matrize wird in dem Kern angeordnet, beispielsweise ebenfalls in einer Aufnahme, um die Matrize auch auswechseln zu können.

Um die von der Erfindung vorgeschlagene Vorrichtung für unterschiedliche Rohre, unterschiedliche Einstanzelemente, unterschiedliche Wanddicken der Rohre verwenden zu können, kann erfindungsgemäß vorgesehen sein, dass der Kern auswechselbar an der Halterung angebracht ist.

Für die Aufnahme der beim Stanzen auftretenden Kräfte kann es ausreichen, dass die Auflage eine ebene Fläche für das Rohr aufweist. Es hat sich jedoch als besonders sinnvoll herausgestellt, die das Rohr abstützende Auflagefläche an die Außenform des Rohrs anzupassen, so dass der Zwischenraum zwischen dem Kern und der Auflage die Form eines Ringspalts aufweist, dessen Form und Größe an das Rohr angepasst sind. Dieser Ringspalt kann sich beispielsweise über 1/4 - 1/3 des Umfangs des Kerns erstrecken.

In nochmaliger Weiterbildung der Erfindung kann vorgesehen sein, dass die Aufnahme des Kerns für das Einstanzelement beziehungsweise die Matrize in Richtung auf ein freies Ende des Kerns offen ist. Nach dem Anbringen des Einstanzelements lässt sich dann das Rohr aus der Vorrichtung einfach herausziehen.

Andererseits ist es natürlich auch möglich, den Kern aus mehreren Teilen zusammenzusetzen, um nach dem Durchführen des Stanzvorgangs den Kern aus dem Rohr herausnehmen zu können.

Da Einstanzelemente an Rohren unter Umständen mit einem größeren Abstand von dem Rohr Ende angebracht werden müssen, schlägt die Erfindung in Weiterbildung vor, dass die Halterung für den Kern eine Stange aufweist, die in Axialrichtung des Kerns verläuft und in radialer Richtung nicht über die Außenform des Kerns hinausragt. Dadurch kann das Rohr über den Kern aufgeschoben und soweit weiter geschoben werden, wie die Stange reicht.

Um beim Anbringen eines Einstanzelements an der Außenseite eine das Loch umgebende ebene Fläche herzustellen, kann vorgesehen sein, dass der Stempel beziehungsweise die Matrize eine den Teil, der die Verformung bewirkt, umgebende ebene Fläche aufweist.

Das von der Erfindung vorgeschlagene Verfahren läuft so ab, dass an der Stelle des Rohrs, an der ein Einstanzelement angebracht werden soll, an der einen Seite der Rohrwand die Matrize und an der anderen Seite das Einstanzelement gehaltert wird. Das an der Außenseite des Rohrs anzuordnende Element wird dabei mit einem gewissen radialen Abstand gehalten. Dann wird der Querschnitt des Rohrs an der Stelle, wo der Stanzvorgang durchgeführt werden soll, mit einem festen Gegenstand im wesentlichen vollständig ausgefüllt. An der den beiden Elementen gegenüberliegenden Seite wird das Rohr an seiner Außenseite unterstützt. Dann erfolgt der Stanzvorgang durch ein Anpressen des an der Außenseite des Rohrs angeordneten Elements.

Wenn das Stanzelement an der Innenseite des Rohrs angebracht werden soll, wird es an der Innenseite des Rohrs anliegend angeordnet und die Matrize an der Außenseite mit Abstand angeordnet, bevor sie gegen das Rohr angepresst wird.

Soll dagegen ein Stanzelement an der Außenseite des Rohrs befestigt werden, so wird die Matrize an der Innenseite des Rohrs anliegend angeordnet und das Stanzelement zunächst mit Abstand an der Außenseite angeordnet, bevor es gegen das Rohr angepresst wird.

Zur korrekten Positionierung innerhalb des Rohrs wird das entsprechende Element in einer Aufnahme eines Kerns eingelegt, mit dem der Querschnitt des Rohrs ausgefüllt wird.

Erfindungsgemäß wird das Rohr an seiner Außenseite vorzugsweise über mindestens ein Viertel seines Umfangs unterstützt.

Zur Durchführung kann vorgesehen sein, dass das Rohr bei stationär gehaltenem Kern und Auflage zwischen den Kern und die Auflage axial eingeschoben und nach dem Stanzvorgang wieder herausgezogen wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: schematisch die Einzelteile der von der Erfindung vorgeschlagenen Vorrichtung;
- Figur 2: in einer perspektivischen Darstellung nochmals Einzelteile der Vorrichtung;
- Figur 3: zur besseren Erläuterung eine Stirnansicht der Vorrichtung, teilweise geschnitten;
- Figur 4: die Stirnansicht im Moment der Beendigung des Einstanzvorgangs;
- Figur 5: einen Schnitt durch die Anordnung der Figur 4;
- Figur 6: eine Vergrößerung der Darstellung der Figur 5;
- Figur 7: eine der Figur 2 entsprechende Darstellung nach dem Einpressen;
- Figur 8: den Vorgang nach dem abnehmen des Stempels;
- Figur 9: einen Schnitt durch die fertig gestellte Anordnung;
- Figur 10: perspektivisch einen Schnitt durch ein Rohrelement mit einer Einstanzmutter
- Figur 11: schematisch eine weitere Möglichkeit.

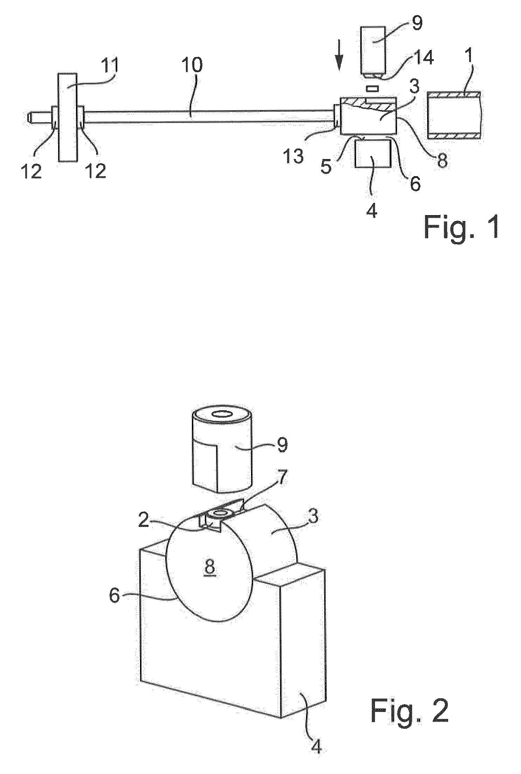

In Figur 1 sind in einer schematischen teilweise geschnittenen Darstellung Einzelheiten der Vorrichtung nach der Erfindung dargestellt. Die Vorrichtung dient dazu, an einem Rohr 1, das im Schnitt dargestellt ist, eine Einstanzmutter anzubringen. Diese Einstanzmutter 2 ist angedeutet. Die Vorrichtung enthält einen Kern 3, im dargestellten Beispiel ein massives zylindrisches Metallstück, dessen Außenform und Größe dem Innenquerschnitt des Rohrs 1 entspricht. Wird das Rohr 1 nach links geschoben, so füllt der Kern 3 das Rohr 1 aus.

Unterhalb des Kerns 3 ist ein Block 4 angeordnet, der beispielsweise auf einer Maschinenbasis steht. Die Oberseite 5 des Blocks 4 bildet eine Auflagefläche 5. Zwischen der Unterseite des Kerns 3 und der Auflagefläche 5 des Blocks 4 ist ein Zwischenraum 6 gebildet. Die Größe des Zwischenraums 6 entspricht mindestens der Wandstärke des Rohrs 1.

In der Oberseite des Kerns 3, also auf der dem Block 4 abgewandten Seite, ist eine Aufnahme 7 gebildet, die in Richtung auf das freie Ende 8 des Kerns 3 offen ist. Diese Aufnahme 7 dient zur Aufnahme der Einstanzmutter 2, die in der Darstellung noch oberhalb der Aufnahme 7 angeordnet ist. Oberhalb des Kerns 3 ist ein Pressstempel 9 angeordnet, der in Richtung auf den Kern 3 angepresst werden kann.

Der Kern 3 ist an dem Ende einer Stange 10 angebracht, die mit ihrem anderen Ende in einer Stütze 11 eingesetzt ist. Die Stange 10 kann im Bereich ihrer beiden Enden ein Gewinde aufweisen, so dass sie in einer bestimmten axialen Position mithilfe von Muttern 12 an der Stütze 11 fixiert werden kann. Zum Festlegen des Kerns 3 an der Stange 10 dient eine Kontermutter 13.

Zum Durchführen des Verfahrens wird die Einstanzmutter 2 in die Aufnahme 7 eingesetzt. Anschließend wird das Rohr 1 auf den Kern 3 aufgeschoben, bis es in der Position ist, an der die Einstanzmutter angebracht werden soll. Der Pressstempel 9 wird dann abgesenkt und gegen das Rohr 1 gepresst. Dadurch stanzt sich die Einstanzmutter 2 in an sich bekannter Weise ein Loch in der Wand des Rohrs 1, und im Zusammenwirken mit der eine Matrize 14 bildenden Vorderseite des Pressstempels 9 erfolgt eine Verformung des Rohrs im Bereich der hergestellten Öffnung, die die Einstanzmutter dann an der Rohrwandung festlegt. Anschließend wird das Rohr 1 zurückgezogen. Die Einstanzmutter gleitet durch die zum freien Ende 8 hin offene Aufnahme 7 heraus.

In der dargestellten Ausführungsform bildet das dem Kern 3 zugewandte Ende des Pressstempels die Matrize 14. Der Pressstempel 9 könnte auch eine auswechselbare Matrize 14 aufweisen.

Der Einfachheit halber wird immer einem Rohr 1 erwähnt. Es kann sich aber auch um einen rohrartigen Ansatz eines sonstigen Gegenstands handeln. Auch bei einem rohrähnlichen Gegenstand, der etwas von der exakten Zylinderform abweicht, kann das Verfahren nach der Erfindung angewendet werden. Selbstverständlich ist weder die Vorrichtung noch das Verfahren auf ein Rohr mit einer Kreiszylinderform beschränkt.

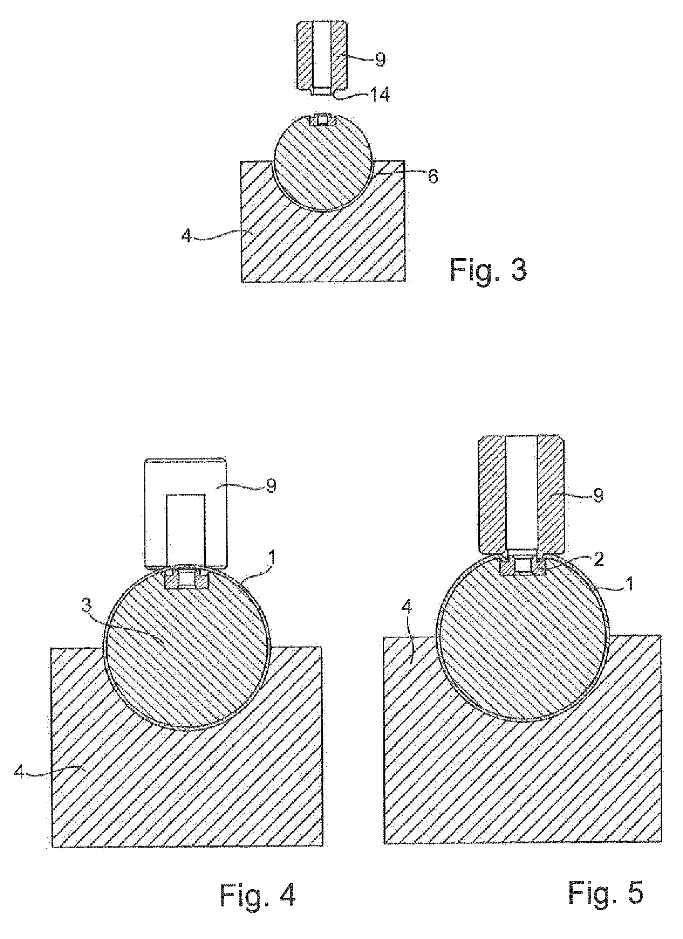

Die Figur 2 zeigt Teile der Vorrichtung in einer perspektivischen Darstellung. Hier ist zu sehen, dass der die Auflagefläche 5 enthaltende Block 4 so gestaltet ist, dass die Auflagefläche 5 die Form eines Halbzylinders aufweist, so dass der Zwischenraum 6 zwischen dem Kern 3 und dem Block 4 die Form eines Zylinderspalts aufweist. Dies kann man auch aus der Figur 3 sehen. Dieser Zylinderspalt entspricht natürlich der Wandstärke des zu bearbeitenden Rohrs. Die Einstanzmutter 2 als Beispiel für ein Stanzelement liegt in der Aufnahme 7. Ihr Stanzvorsprung liegt noch innerhalb der Zylinderfläche des Kerns 3, damit das Rohr auf den Kern aufgeschoben werden kann.

Wird nun bei der Abwärtsbewegung des Pressstempels 9 die an der Vorderseite des Pressstempels 9 gebildete Matrize 14 auf die Außenseite des Rohrs 1 aufgepresst, so wird das Rohr 1 an dieser Stelle flachgedrückt, so dass bei diesem Vorgang des Flachdrückens der Stanzvorsprung der Stanzmutter 2 in Kontakt mit dem Rohr 1 gerät und jetzt das Loch stanzen kann. Dies geht aus Figur 4 und dann aus Figur 5 hervor. Man sieht hier in Figur 5 deutlich, dass im Bereich der Stanzmutter 2 das Rohr 1 flachgedrückt ist, so dass es im Bereich der Öffnung eine ebene Außenseite aufweist.

Die Figur 5 zeigt einen Schnitt durch die Anordnung. Hier ist zu sehen, dass die Matrize an der Unterseite des Pressstempels 9 das Blech so verformt hat, dass die Einstanzmutter festgelegt ist.

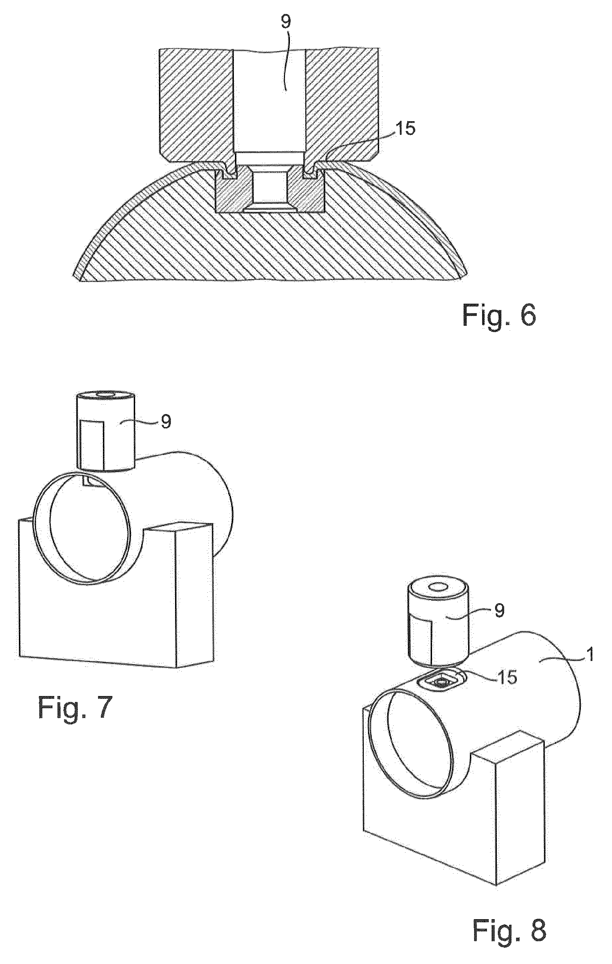

Es geht nochmals deutlicher aus der vergrößerten Schnittdarstellung der Figur 6 hervor. Hier ist auch die ebene Fläche 15 zu sehen, die von dem Pressstempel 9 erzeugt wurde.

Die Figur 7 zeigt nochmals eine der Figur 2 ähnliche Darstellung nach durchgeführtem Befestigungsvorgang. Wird nun der Pressstempel 9 wieder angehoben, so kann man das Ergebnis der Anbringung der Stanzmutter sehen. Die durch die Stanzmutter gebildete Öffnung ist von einer ebenen Fläche 15 umgeben, die dann allseits in die zylindrische Oberfläche des Rohrs 1 übergeht.

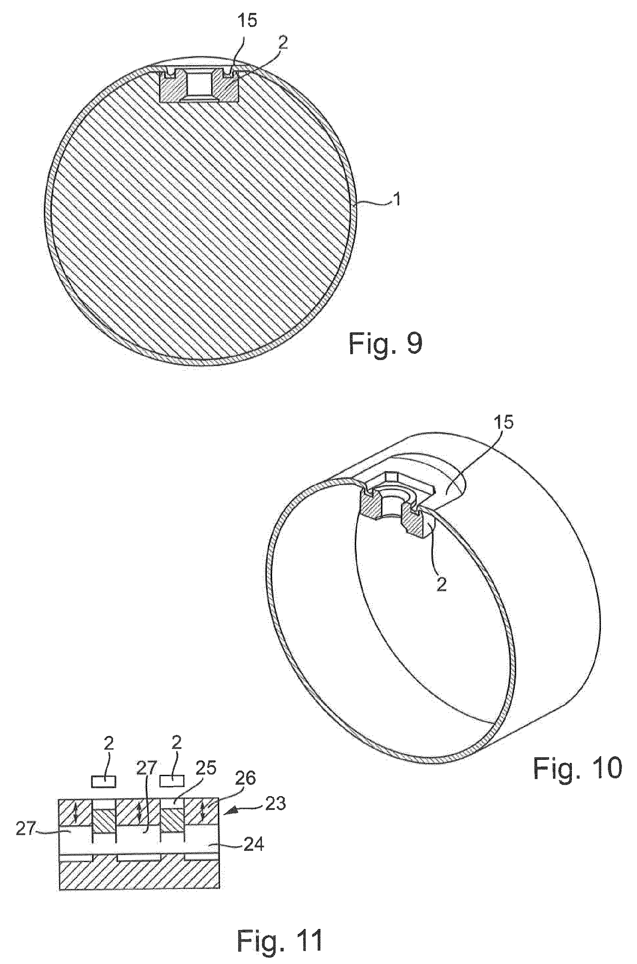

Die Figur 9 zeigt einen Schnitt durch das Endergebnis mit der an der Innenseite des Rohrs 1 angebrachten Einstanzmutter, umgeben von der ebenen Fläche 15, die dann in die zylindrische Oberfläche des Rohrs übergeht.

Die Figur 10 zeigt einen perspektivischen Schnitt, wo man ebenfalls die ebene Fläche 15 außerhalb der Öffnung der Einstanzmutter 2 sieht.

Das dargestellte Ausführungsbeispiel erläutert ein Verfahren, bei dem eine Einstanzmutter an der Innenseite eines Rohrs angebracht wird. Es ist auch möglich, dass eine Einstanzmutter an der Außenseite des Rohrs angebracht wird. In diesem Fall wird die Matrize in einer Aufnahme 7 des Kerns 3 angeordnet, und die Einstanzmutter 2 wird an dem Pressstempel 9 gehalten.

Die Figur 11 zeigt ebenfalls schematisch eine weitere Möglichkeit zur Durchführung eines Verfahrens nach der Erfindung. Es wird ein Kern 23 verwendet, der längs einer horizontalen Mittelebene geteilt ist. In dem Kern 23 ist eine Nockenwelle 24 gelagert. Der Kern 23 weist wiederum, ähnlich wie bei der Ausführungsform der Figur 1, eine in Axialrichtung verlaufende Nut 25 auf, die allerdings über die gesamte Länge des Kerns durchgeht. In dem Kern sind drei Schieber 26 radial verschiebbar, die mit den Nocken 27 der Nockenwelle zusammenwirken. In der dargestellten Position sind die Nocken 27 nach oben orientiert und haben die Schieber 23 nach oben geschoben, so dass sie die Nut 25 ausfüllen. Zwischen den Schiebern 26 sind daher innerhalb der Nut 25 drei Aufnahmen für jeweils eine Stanzmutter 2 gebildet. Dadurch lassen sich die Stanzmuttern 2 exakt positionieren. Sobald die Einstanzmuttern 2 in die jeweiligen Aufnahmen eingesetzt sind, kann ein Rohr 1 über den Kern geschoben werden. Dann lassen sich die Stanzmuttern in der gleichen Weise mit dem Rohr verbinden, wie dies unter Bezugnahme auf die vorhergehende Ausführungsform beschrieben wurde. Nach dem Befestigen der Einstanzmuttern 2 an dem Rohr 1 wird die Nockenwelle 24 verdreht und die Schieber 26 zurückgezogen. Dann kann das Rohr zusammen mit den an ihm befestigten Einstanzmuttern 2 von dem Kern 23 entfernt werden.

Auf diese Weise lassen sich auch mehrere Einstanzmuttern an einem Rohr anbringen, entweder in einem gemeinsamen Vorgang oder kurz hintereinander.

Es ist natürlich auch möglich, einen Kern mit mehreren durchgehenden Nuten 25 zu verwenden, so dass die Einstanzmuttern nicht alle an der gleichen Umfangsposition des Rohrs angebracht werden.

## Patentansprüche

1. Vorrichtung zum Anbringen von Stanzelementen, insbesondere Stanzmuttern an Rohren oder dergleichen, mit
einem Kern (3), der
eine den Querschnitt des Rohrs (1) im wesentlichen vollständig ausfüllende Form und Größe aufweist,
einer Halterung für den Kern (3),
einem Pressstempel (9), der
**außerhalb des Kerns angeordnet und**
in Richtung auf den Kern (3) bewegbar ausgebildet ist,
einer Auflage (5) auf der dem Pressstempel (9) abgewandten Seite des Kerns (3), die
von dem Kern (3) einen der Wandstärke des Rohrs (1) entsprechenden, einen Zwischenraum (6) bildenden Abstand aufweist, einer Aufnahme (7) für ein Stanzelement, sowie mit
einer Matrize (14), **wobei**
die **in dem Kern (3) gebildete Aufnahme durch eine mindestens einseitig zur Stirnfläche hin offene Nut gebildet ist.**

2. Vorrichtung nach Anspruch 1, bei der zum Anbringen eines Stanzelements an der Innenseite des Rohrs (1) die Aufnahme (7) für das Stanzelement in dem Kern (3) und die Matrize (14) an dem Pressstempel (9) angeordnet ist.

3. Vorrichtung nach Anspruch 1, bei der zum Anbringen eines Stanzelements an der Außenseite des Rohrs (1) die Matrize (14) in dem Kern (3) und die Aufnahme für das Stanzelement an dem Pressstempel (9) angeordnet ist.

4. Vorrichtung nach einem der vorhergehenden Ansprüche, bei dem der Kern (3) auswechselbar an der Halterung angebracht ist.

5. Vorrichtung nach einem der vorhergehenden Ansprüche, bei der der Zwischenraum (6) zwischen dem Kern (3) und der Auflage (5) die Form eines Ringspalt (6) aufweist.

6. Vorrichtung nach einem der vorhergehenden Ansprüche, bei der die dem Kern (3) zugewandte Anlagefläche der Auflage der Außenform des Rohrs (1) angepasst ist.

7. Vorrichtung nach einem der vorhergehenden Ansprüche, bei der die Aufnahme (7) des Kerns (3) für das Stanzelement oder die Matrize (14) in Richtung auf ein freies Ende (8) des Kerns (3) offen ist.

8. Vorrichtung nach einem der vorhergehenden Ansprüche, bei der die Halterung für den Kern (3) eine Stange (10) aufweist, die in Axialrichtung des Kerns (3) verläuft und in radialer Richtung nicht über die Außenform des Kerns (3) vorsteht.

9. Vorrichtung nach einem der vorhergehenden Ansprüche, bei der der Pressstempel (9) eine seine Verformungsausbildung umgebende ebene Fläche aufweist.

10. Verfahren zum Anbringen von Stanzelementen, insbesondere Stanzmuttern an Rohren oder dergleichen mit folgenden Verfahrensschritten:
an der einen Seite der Wand des Rohrs (1) wird ein Stanzelement angeordnet,
an der gleichen Stelle wird an der anderen Seite der Wand des Rohrs (1) eine Matrize (14) angeordnet,
im Bereich dieser Stelle wird der Querschnitt des Rohrs (1) mit einem Kern mit einer mindestens einseitig zur Stirnseite hin offenen Nut ausgefüllt,
das Rohr (1) wird in diesem Bereich an seiner Außenseite an der dem Stanzelement und der Matrize (14) abgewandten Seite unterstützt,
bei Anordnung des Stanzelements an der Innenseite des Rohrs (1) in der Nut wird die an der Außenseite des Rohrs (1) angeordnete Matrize (14) und bei Anordnung der Matrize (14) an der Innenseite des Rohrs (1) in der Nut wird das an der Außenseite des Rohrs (1) angeordneten Stanzelement gegen das Rohr (1) angepresst.

11. Verfahren nach Anspruch 10, bei dem zum Anbringen eines Stanzelements an der Innenseite des Rohrs (1) das Stanzelement an der Innenseite des Rohrs (1) anliegend angeordnet und die Matrize (14) gegen das Rohr (1) angepresst wird.

12. Verfahren nach Anspruch 10, bei dem zum Anbringen eines Stanzelements an der Außenseite des Rohrs (1) die Matrize (14) an der Innenseite des Rohrs (1) anliegend angeordnet und das Stanzelement gegen das Rohr (1) angepresst wird.

13. Verfahren nach einem der Ansprüche 10 bis 12, bei dem das Stanzelement oder die Matrize (14) in eine Aufnahme (7) eines Kerns (3) eingelegt und der Querschnitt des Rohrs (1) mithilfe des Kerns (3) ausgefüllt wird.

14. Verfahren nach einem der Ansprüche 10 bis 13, bei dem das Rohr (1) an seiner Außenseite über mindestens ein Viertel, vorzugsweise über mindestens ein Drittel seines Umfangs unterstützt wird.

15. Verfahren nach einem der Ansprüche 10 bis 14, bei dem das Rohr (1) in dem die Gewindeöffnung des Stanzelements umgebenden Bereich abgeplattet wird.

16. Verfahren nach einem der Ansprüche 13 bis 15, bei dem das Rohr (1) bei stationär gehaltenem Kern (3) und Auflage (5) zwischen den Kern (3) und die Auflage (5) axial eingeschoben und nach dem Stanzvorgang wieder herausgezogen wird.

## Claims

1. Device for attaching piercing elements, in particular piercing nuts, to tubes or the like, comprising
a core (3), having
a shape and size essentially completely filling the cross section of the tube (1),
a holder for the core (3),
a press punch (9), which is
arranged outside the core and
configured to be movable in the direction towards the core (3),
a support (5) on the side of the core (3) facing away from the press punch (9),
which support is spaced from the core (3) by an intermediate distance (6) corresponding to the wall thickness of the tube (1),
a seat (7) for a piercing element, and comprising
a die plate (14), wherein
the seat provided in the core (3) is a groove open towards the end face on at least one side.

2. Device according to claim 1, wherein for attaching a piercing element on the interior side of the tube (1 ) the seat (7) for the piercing element is arranged in the core (3) and the die plate (14) is arranged on the press punch (9).

3. Device according to claim 1, wherein for attaching a piercing element on the exterior side of the tube (1) the die plate (14) is arranged in the core (3) and the seat for the piercing element is arranged on the press punch (9).

4. Device according to any of the preceding claims, wherein the core (3) is exchangeably attached to the holder.

5. Device according to any of the preceding claims, wherein the intermediate distance (6) between the core (3) and the support (5) has the shape of an annular gap (6).

6. Device according to any of the preceding claims, wherein the abutment surface of the support facing the core (3) is matched to the exterior shape of the tube (1).

7. Device according to any of the preceding claims, wherein the seat (7) of the core (3) for the piercing element or the die plate (14) is open in the direction towards a free end (8) of the core (3).

8. Device according to any of the preceding claims, wherein the holder for the core (3) includes a rod (10) which extends in the axial direction of the core (3) and in the radial direction does not project beyond the exterior shape of the core (3).

9. Device according to any of the preceding claims, wherein the press punch (9) includes a planar surface surrounding the deforming section thereof.

10. Method for attaching piercing elements, in particular piercing nuts, to tubes or the like, comprising the following method steps:
arranging a piercing element on one side of the wall of the tube (1),
arranging a die plate (14) on the same location on the other side of the wall of the tube (1),
filling the cross section of the tube (1) in the region of said location with a core having a groove open towards the end face on at least one side,
supporting the tube (1) in said region on the exterior side thereof on the side facing away from the piercing element and the die plate (14),
pressing the die plate (14) arranged on the exterior side of the tube (1) against the tube (1), upon arrangement of the piercing element on the interior side of the tube (1) in the groove, and pressing the piercing element arranged on the exterior side of the tube (1) against the tube (1), upon arrangement of the die plate (14) on the interior side of the tube (1) in the groove.

11. Method according to claim 10, wherein for attaching a piercing element on the interior side of the tube (1) the piercing element is arranged in abutment to the interior side of the tube (1) and the die plate (14) is pressed against the tube (1).

12. Method according to claim 10, wherein for attaching a piercing element on the exterior side of the tube (1) the die plate (14) is arranged in abutment to the interior side of the tube (1) and the piercing element is pressed against the tube (1).

13. Method according to any of claims 10 to 12, wherein the piercing element or the die plate (14) is placed in a seat (7) of a core (3) and the cross section of the tube (1) is filled using the core (3).

14. Method according to any of claims 10 to 13, wherein the tube (1) is supported on the exterior side thereof over at least one quarter, preferably over at least one third of its circumference.

15. Method according to any of claims 10 to 14, wherein the tube (1) is flattened in the region surrounding the thread opening of the piercing element.

16. Method according to any of claims 13 to 15, wherein the tube (1) is axially inserted between the core (3) and the support (5), with the core (3) and the support (5) being held stationary, and retracted after completion of the punching procedure.

## Revendications

1. Dispositif d'application d'éléments de poinçonnage, en particulier des écrous de poinçonnage, sur des tubes ou similaire, comprenant
un noyau (3), présentant
une forme et taille remplissant la section transversale du tube (1) essentiellement complètement,
un dispositif de retenue pour le noyau (3),
un poinçon de presse (9), étant
disposé à l'extérieur du noyau et
conçu pour se déplacer en direction vers le noyau (3),
un support (5) sur le côté du noyau (3) détourné du poinçon de presse (9),
le support étant écarté du noyau (3) en formant un espace intermédiaire (6) correspondant à l'épaisseur de la paroi du tube (1),
une siège (7) pour un élément de poinçonnage, ainsi que comprenant une matrice (14), dans lequel
la siège prevue dans le noyau (3) est conçue sous forme d'une rainure ouverte vers la face frontale au moins sur un côté.

2. Dispositif selon la revendication 1, dans lequel pour l'application d'un élément de poinçonnage sur le côté intérieur du tube (1) la siège (7) pour l'élément de poinçonnage est disposée dans le noyau (3) et la matrice (14) est disposée sur le poinçon de presse (9).

3. Dispositif selon la revendication 1, dans lequel pour l'application d'un élément de poinçonnage sur le côté extérieur du tube (1) la matrice (14) est disposée dans le noyau (3) et la siège pour l'élément de poinçonnage est disposée sur le poinçon de presse (9).

4. Dispositif selon l'une quelconque des revendications précédentes, dans lequel le noyau (3) est interchangeablement attaché au dispositif de retenue.

5. Dispositif selon l'une quelconque des revendications précédentes, dans lequel l'espace intermédiaire (6) entre le noyau (3) et le support (5) se présente sous forme d'une fente annulaire (6).

6. Dispositif selon l'une quelconque des revendications précédentes, dans lequel une surface d'appui du support orientée vers le noyau (3) est adaptée à la forme extérieure du tube (1).

7. Dispositif selon l'une quelconque des revendications précédentes, dans lequel la siège (7) du noyau (3) pour l'élément de poinçonnage ou la matrice (14) est ouverte en direction vers une extrémité libre (8) du noyau (3).

8. Dispositif selon l'une quelconque des revendications précédentes, dans lequel le dispositif de retenue pour le noyau (3) comprend une tige (10) qui s'étend en direction axiale du noyau (3) et en direction radiale ne dépasse pas la forme extérieure du noyau (3).

9. Dispositif selon l'une quelconque des revendications précédentes, dans lequel le poinçon de presse (9) comprend une surface plane entourant sa section de déformation.

10. Procédé d'application d'éléments de poinçonnage, en particulier des écrous de poinçonnage, sur des tubes ou similaire, comprenant les étapes suivantes:
disposer un élément de poinçonnage sur l'un côté de la paroi du tube (1),
disposer une matrice (14) sur la même place sur l'autre côté de la paroi du tube (1),
remplir la section transversale du tube (1), dans la région de ladite place, d'un noyau présentant une rainure ouverte vers la face frontale au moins sur un côté, supporter le tube (1) dans ladite région sur son côté extérieur sur le côté détourné de l'élément de poinçonnage et la matrice (14),
presser la matrice (14) disposée sur le côté extérieur du tube (1) contre le tube (1) en cas de disposition de l'élément de poinçonnage sur le côté intérieur du tube (1) dans la rainure et presser l'élément de poinçonnage disposé sur le côté extérieur du tube (1) contre le tube (1) en cas de disposition de la matrice (14) sur le côté intérieur du tube (1) dans la rainure.

11. Procédé selon la revendication 10, dans lequel pour l'application d'un élément de poinçonnage sur le côté intérieur du tube (1) on dispose l'élément de poinçonnage en butée sur le côté intérieur du tube (1) et on presse la matrice (14) contre le tube (1).

12. Procédé selon la revendication 10, dans lequel pour l'application d'un élément de poinçonnage sur le côté extérieur du tube (1) on dispose la matrice (14) en butée sur le côté intérieur du tube (1) et on presse l'élément de poinçonnage contre le tube (1).

13. Procédé selon l'une quelconque des revendications 10 à 12, dans lequel on place l'élément de poinçonnage ou la matrice (14) dans une siège (7) d'un noyau (3) et on remplit la section transversale du tube (1) au moyen du noyau (3).

14. Procédé selon l'une quelconque des revendications 10 à 13, dans lequel on supporte le tube (1) sur son côté extérieur à travers au moins un quart, de préférence à travers au moins un tiers de sa circonférence.

15. Procédé selon l'une quelconque des revendications 10 à 14, dans lequel on aménage un aplatissement du tube (1) dans la région entourant l'ouverture du filetage de l'élément de poinçonnage.

16. Procédé selon l'une quelconque des revendications 13 à 15, dans lequel on insère le tube (1) axialement entre le noyau (3) et le support (5), en maintenant le noyau (3) et le support (5) stationnaire, et on le rétracte à l'achèvement du poinçonnage.
